# EUROPEAN PATENT APPLICATION

(11) **EP 4 668 192 A1**
(43) Date of publication of application: **24.12.2025**
(21) Application number: 23922908.1
(22) Date of filing: 07.12.2023
(51) Int. Cl.: G06Q 30/0203, G06Q 50/10

(54) **INFORMATION PROCESSING DEVICE, INFERENCE DEVICE, MACHINE LEARNING DEVICE, INFORMATION PROCESSING METHOD, INFERENCE METHOD, AND MACHINE LEARNING METHOD**

(30) Priority: 13.02.2023 JP 2023020361; 13.02.2023 JP 2023020362
(71) Applicant: Toyo Seikan Group Holdings, Ltd., Shinagawa-ku Tokyo 141-8627 (JP)
(72) Inventor: KUNIMASA Hidehiko, Tokyo 141-8627 (JP); TANABE Suguru, Tokyo 141-8627 (JP); FURUKAWA Satoshi, Tokyo 141-8627 (JP); OKAMURA Hiroshi, Tokyo 141-8627 (JP); MIKI Ippei, Tokyo 141-8627 (JP); TAKEUCHI Yuri, Tokyo 141-8627 (JP)
(74) Representative: Piticco, Lorena
(86) International application number: PCT/JP2023/043925
(87) International publication number: WO 2024/171575

(57) **Abstract**

[Object] To provide an information processing device that can stably distribute containers. [Solution] An information processing device 2 includes: an information acquisition unit 203A that acquires, based on web access information, acquisition information D12 as network information D15 related to a prediction target container; and a generation processing unit 203B that generates the demand-supply information D17 corresponding to the network information D15 of the prediction target container when the network information D15 related to the prediction target container and acquired by the information acquisition unit 203A is input to a learning model D18. The web access information is included in an information storage carrier attached to a container. The container is filled with a content and thus constitutes a product. The acquisition information D12 indicates a type of a content that a consumer of the product desires to acquire among contents with which a different container having a specification identical to a specification of the container can be filled. The learning model D18 is trained by machine learning with a correlation between the network information D15 of a training target container and demand-supply information D16 including, for each of the types of the contents, information related to demand or supply of the product in which the different container having the specification identical to the specification of the container has been filled.

## Description

### Technical Field

The present invention relates to an information processing device, an inference device, a machine learning device, an information processing method, an inference method, and a machine learning method.

### Background Art

In the related art, as a management method used when a product, which is a container filled with a content, is distributed in a distribution network, it is known that inventory management, sales prediction, marketing, tracing, and the like of the product are performed using a container identification code assigned to the container. For example, Patent Document 1 discloses a technology for managing a product by reading a barcode printed on a container with a barcode reader. In addition, Patent Document 2 discloses a technology for managing a product by reading an IC tag attached to a container with a reader/writer.

### Citation List

### Patent Literature

Patent Document 1: JP 2003-256765 A
Patent Document 2: JP 2018-188199 A

### Summary of Invention

### Technical Problem

In Patent Document 1 and Patent Document 2, the distribution and inventory of products are managed using container identification codes attached to containers. For example, when a production form such as high-mix low-volume production in which containers having an identical specification are used for a plurality of types of contents is adopted, distribution situations of respective products filled with the contents vary depending on differences in the types of the contents. Thus, if information related to demand and supply of the product can be grasped in advance for each type of the contents, it is considered that the information can be very useful in adopting the production form as described above. In addition, if information of a consumer related to the type of content that the consumer desires to acquire next can be grasped in advance, it is considered that the information can be very useful in adopting the production form as described above.

To solve the above-mentioned problems, an object of the present invention is to provide an information processing device, an inference device, a machine learning device, an information processing method, an inference method, and a machine learning method that can stably distribute containers.

### Solution to Problem

In order to achieve the above object, an information processing device according to an aspect of the present invention includes:
an information acquisition unit configured to acquire, based on web access information, acquisition information as network information related to a prediction target container, the web access information included in an information storage carrier attached to a container, the container being filled with a content and thus constituting a product, the acquisition information indicating a type of a content that a consumer of the product desires to acquire among contents with which a different container having a specification identical to a specification of the container can be filled; and
a generation processing unit configured to generate demand-supply information corresponding to the network information of the prediction target container when the network information related to the prediction target container and acquired by the information acquisition unit is input to a learning model trained by machine learning with a correlation between the network information of a training target container and demand-supply information including, for each of the types of the contents, information related to demand or supply of the product in which the different container having the specification identical to the specification of the container has been filled with the content.

Further, in order to achieve the above object, an information processing device according to an aspect of the present invention includes:
an information acquisition unit configured to acquire, based on web access information, acquisition information, the web access information included in an information storage carrier attached to a container, the container being filled with a content and thus constituting a product, the acquisition information indicating a type of a content that a consumer of the product desires to acquire among contents with which a different container having a specification identical to a specification of the container can be filled; and
a storage processing unit configured to store, in a storage device, the acquisition information acquired by the information acquisition unit.

### Advantageous Effects of Invention

According to the aspect of the present invention, the information processing device acquires, based on the information included in the information storage carrier attached to the container constituting the product, the acquisition information as the network information related to the prediction target container, and generates the demand-supply information when the acquisition information is input to the learning model, wherein the acquisition information indicates the type of the content that the consumer of the product desires to acquire among the contents with which a different container having a specification identical to a specification of the container can be filled, and the demand-supply information includes the information related to the demand or supply of the product in which the different container having the specification identical to the specification of the container has been filled with the content for each of the types of the contents. This allows the containers to be stably distributed by utilizing the demand-supply information.

Further, according to the aspect of the present invention, the information processing device acquires, based on the information included in the information storage carrier attached to the container constituting the product, the acquisition information indicating the type of the content that the consumer desires to acquire among the contents with which a different container having a specification identical to a specification of the container can be filled, and stores the acquisition information in the storage device. This allows the containers to be stably distributed by utilizing the acquisition information. For example, in a case of performing high-mix low-volume production in which containers having the identical specification are used for a plurality of types of contents, a consumer demand prediction and a supply plan for a distributor can be provided with high accuracy based on the acquisition information, and thus the containers can be stably distributed.

Problems, configurations, and effects other than those mentioned above will be clarified in the embodiments of the invention, which will be described later.

### Brief Description of Drawings

FIG. 1 is an overall diagram illustrating an example of a container distribution system 1 according to the present embodiment.
FIG. 2 is an explanatory diagram illustrating an example of distribution stages of containers 10.
FIG. 3 is a block diagram illustrating an example of an information processing device 2 according to the present embodiment.
FIG. 4 is a functional explanatory diagram illustrating an example of a container resource allocation management function 200 and an information flow.
FIG. 5 is a data configuration diagram illustrating an example of a distribution management database 210.
FIG. 6 is a data configuration diagram illustrating an example of a container resource allocation management database 211.
FIG. 7 is a functional explanatory diagram illustrating an example of a container acquisition management function 201 and an information flow.
FIG. 8 is a data configuration diagram illustrating an example of a web management database 212.
FIG. 9 is a data configuration diagram illustrating an example of a container acquisition management database 213.
FIG. 10 is a functional explanatory diagram illustrating an example of a learning function 202 and an information flow.
FIG. 11 is a functional explanatory diagram illustrating an example of a demand-supply management function 203 and an information flow.
FIG. 12 is a hardware configuration diagram illustrating an example of a computer 900 that constitutes each device.
FIG. 13 is a flowchart depicting an example of a container acquisition management method performed by the container acquisition management function 201.
FIG. 14 is a flowchart depicting an example of a machine learning method by the learning function 202.
FIG. 15 is a flowchart depicting an example of a demand-supply management method performed by the demand-supply management function 203.

### Description of Embodiments

Embodiments of the present invention will be described below with reference to the accompanying drawings. In the following, the scope of the present invention will be schematically described, mainly to the extent necessary to describe the relevant parts of the present invention to achieve the objects of the present invention, and the description will be omitted where publicly known techniques are applied.

### Configuration of Container Distribution System 1

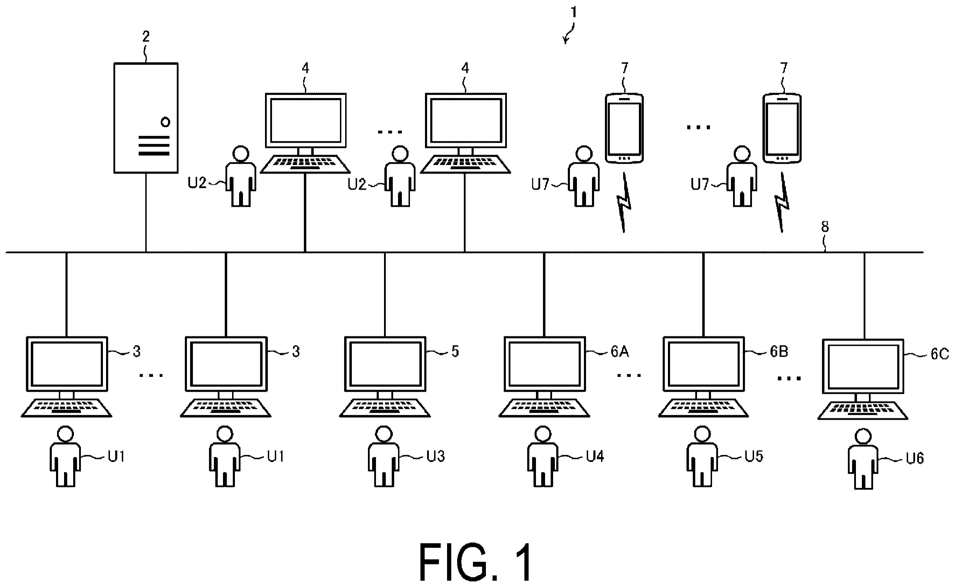

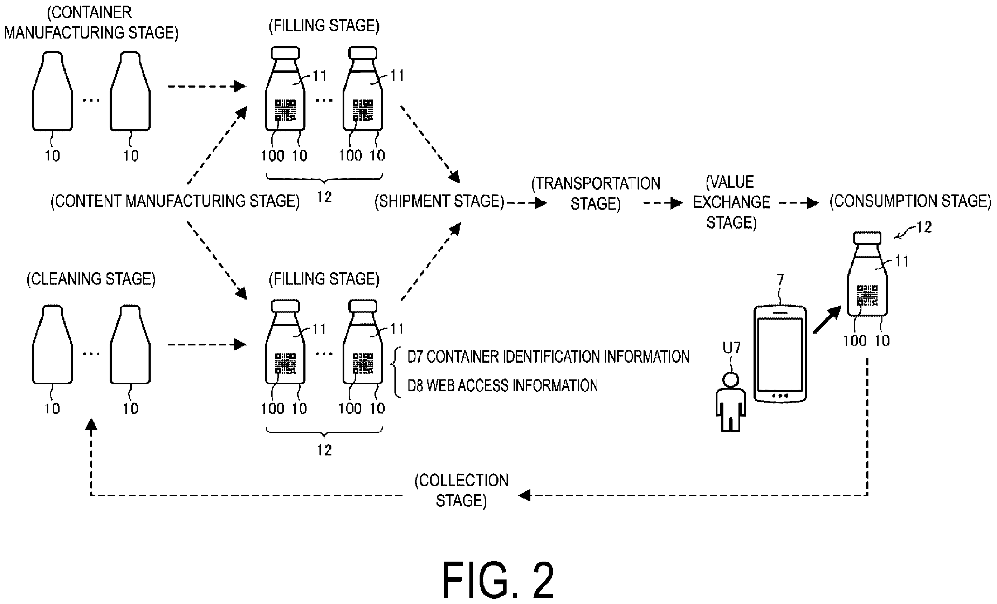

FIG. 1 is an overall view illustrating an example of a container distribution system 1 according to the present embodiment. FIG. 2 is an explanatory diagram illustrating an example of distribution stages of containers 10.

The container distribution system 1 includes an information processing device 2 as a main component. The information processing device 2 is a device that manages various types of information acquired in a process of distributing the containers 10 each of which is filled with a content 11 to constitute products 12 in a distribution network, and that implements a plurality of functions (details thereof will be described later).

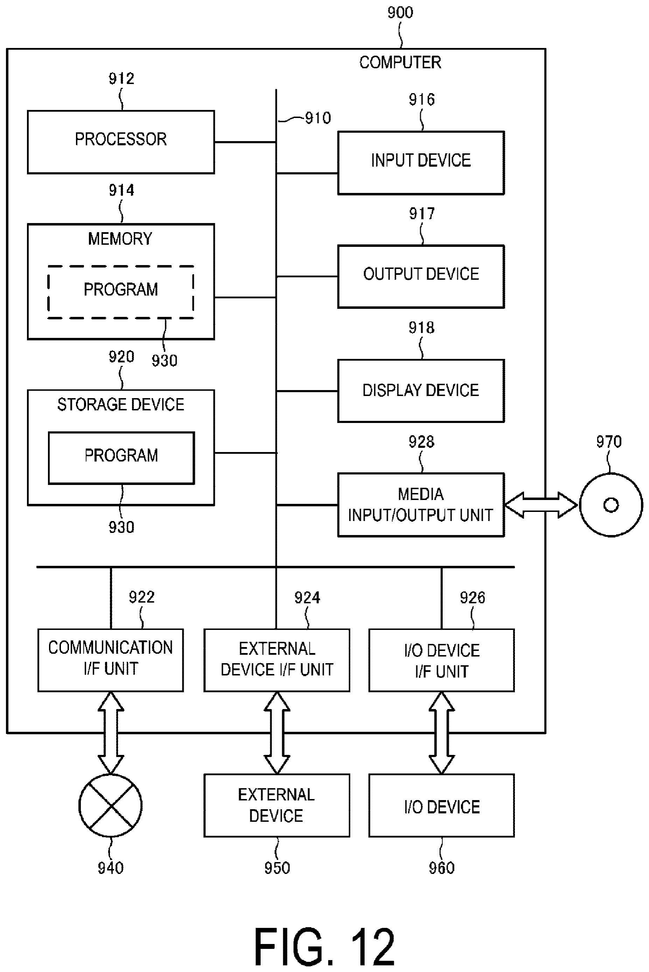

The information processing device 2 is constituted by a general-purpose or dedicated computer (see FIG. 12, which will be described later). The information processing device 2 is connected with a resource allocator terminal device 3 used by a resource allocator U1, an information user terminal device 4 used by an information user U2, a management business operator terminal device 5 used by a management business operator U3 of the information processing device 2, distribution business operator terminal devices 6A to 6C respectively used by a container manufacturer U4, a content manufacturer U5, and a container cleaning service provider U6, and a consumer terminal device 7 used by a consumer U7 via a network 8 that is a wired or wireless network. Note that the numbers of the respective devices 2 to 7 and the configuration of the network 8 are not limited to the example illustrated in FIG. 1.

The resource allocator terminal device 3, the information user terminal device 4, the management business operator terminal device 5, the distribution business operator terminal devices 6A to 6C, and the consumer terminal device 7 are general-purpose or dedicated computers (see FIG. 12, which will be described later), and are constituted by, for example, stationary computers or portable computers. Additionally, the computer is installed with a program such as an application or a browser, receives various types of input operations, and outputs various types of information through a display screen or a voice.

Each of the containers 10 is manufactured using a raw material such as plastic, metal, glass, or paper, for example, and has any shape or size. The specification of the container 10 is determined by a type, a raw material, a capacity, a shape, a size, and the like of the container 10. Examples of the type of the container 10 include a plastic bottle made of polyethylene terephthalate (PET) and the like, a metal can made of steel, aluminum, and the like, a glass bottle, a paper pack, and a laminating pouch. Note that the container 10 may be a returnable container or may be a single-use container.

Here, the condition that a plurality of containers 10 have the identical specification is satisfied when the numerical values of at least one specification item among a plurality of specification items are the same or are included within a specific approximate range, or when the contents of at least one specification item among the plurality of specification items are the same or are included within a specific similar range. For one specification item of the capacity of the container 10, two containers 10 may be treated as containers having the identical specification when both of the capacities of the two containers 10 are, for example, 200 mL or when the capacities of the two containers 10 are, for example, 200 mL and 180 mL, which are within an approximate range. In addition, for one specification item of the type of the container 10, the two containers 10 may be treated as containers having the identical specification when both of the types of the two containers 10 are, for example, glass bottles, or when the types of the two containers 10 are, for example, a steel can and an aluminum can, which are within an approximate range.

As illustrated in FIG. 2, the container 10 is provided with an information storage carrier 100 capable of storing container identification information D7 and web access information D8. The container identification information D7 is information for identifying the container 10 and specifying the specification of the container 10. The container identification information D7 is, for example, a container ID (container identification code) for identifying the container 10 on an individual basis or on a lot basis. Note that the container identification information D7 may be omitted without being stored in the information storage carrier 100. The web access information D8 is information necessary for the consumer U7 to access, for example, a web service that is operated by the management business operator U3. The web access information D8 includes, for example, a web address (URL) for accessing a web page provided by the web service, and link information for starting an application provided by the web service.

The information storage carrier 100 is constituted by a code image such as a one-dimensional code or a two-dimensional code. In this case, a label on which the code image is printed may be attached to or wound around the container 10, or may be embedded inside the formed body of the container 10. In addition, the information storage carrier 100 is constituted by an electronic tag (IC tag) called RFID, or the like. In this case, the electronic tag is embedded inside the formed body of the container 10. Note that a plurality of information storage carriers 100 may be attached to the container 10, and for example, one information storage carrier 100 including the container identification information D7 and another information storage carrier 100 including the web access information D8 may be attached to the container 10.

The content 11 is liquid, solid, powder, granules, or the like. Examples of the type of the content 11 include beverages such as water, juice, and milk, food, pharmaceuticals, cosmetics, and detergent. The content 11 may be at room temperature, chilled (refrigerated), or frozen. In addition, the content 11 may be heated or unheated in the manufacturing process, and may be a fresh product or a processed product in the case of beverages or food.

The container 10 is manufactured by, for example, the container manufacturer U4 (at a container manufacturing stage), and the content 11 is manufactured by the content manufacturer U5 (at a content manufacturing stage). Then, the container 10 is filled with the content 11 by the content manufacturer U5 (at a filling stage), and thereby manufacturing the product 12. The content manufacturer U5 is, for example, a beverage manufacturer, a food manufacturer, or the like. When the content manufacturer U5 specifies the specification and quantity of the containers 10 and order the containers 10 to the container manufacturer U4 or the container cleaning service provider U6, the containers 10 corresponding to the order are delivered from the container manufacturer U4 or the container cleaning service provider U6 and the content manufacturer U5 pays a price for the containers 10 to the container manufacturer U4 or the container cleaning service provider U6. Then, when the information storage carrier 100 is constituted by a code image, a label on which the code image is printed is attached to the container 10 by the content manufacturer U5 at the filling stage, for example. In addition, when the information storage carrier 100 is constituted by an electronic tag, the electronic tag is embedded in the container 10 by the container manufacturer U4 at the container manufacturing stage, and the container identification information D7 and the web access information D8 are written in the electronic tag by the content manufacturer U5 at the filling stage.

The product 12 is shipped from the content manufacturer U5 (at a shipment stage), and is transported to, for example, a value exchange store, a warehouse, or the like (at a transportation stage). Then, the product 12 is exchanged for value to the consumer U7 through, for example, a wholesaler, a retailer, a trading company, or the like (at a value exchange stage), and the content 11 is consumed by the consumer U7 (at a consumption stage). Examples of the consumer U7 include not only general consumers but also business operators and the like. Note that in a case where the container 10 is a returnable container, the content 11 is consumed by the consumer U7 (at the consumption stage), the container 10 is collected from the consumer U7 (at a collection stage) and cleaned by the container cleaning service provider U6 (at a cleaning stage). Then, the cleaned container 10 is filled with the content 11 by the content manufacturer U5 (at the filling stage), thereby manufacturing the product 12.

As described above, the container 10 is distributed through a plurality of distribution stages in the distribution network. Examples of the plurality of distribution stages include, but not limited to, the container manufacturing stage, the content manufacturing stage, the filling stage, the shipment stage, the transportation stage, the value exchange stage, the consumption stage, the collection stage, and the cleaning stage. Note that in a case where the container 10 is a returnable container, the plurality of distribution stages include at least the cleaning stage, the filling stage, and the consumption stage, and the container 10 is reused by repeating these distribution stages. Note that in the present embodiment, a case where the type of the container 10 is a glass bottle manufactured as a returnable container and the type of the content 11 is a beverage such as water, juice, or milk will be mainly described.

### Configuration of Information Processing Device 2

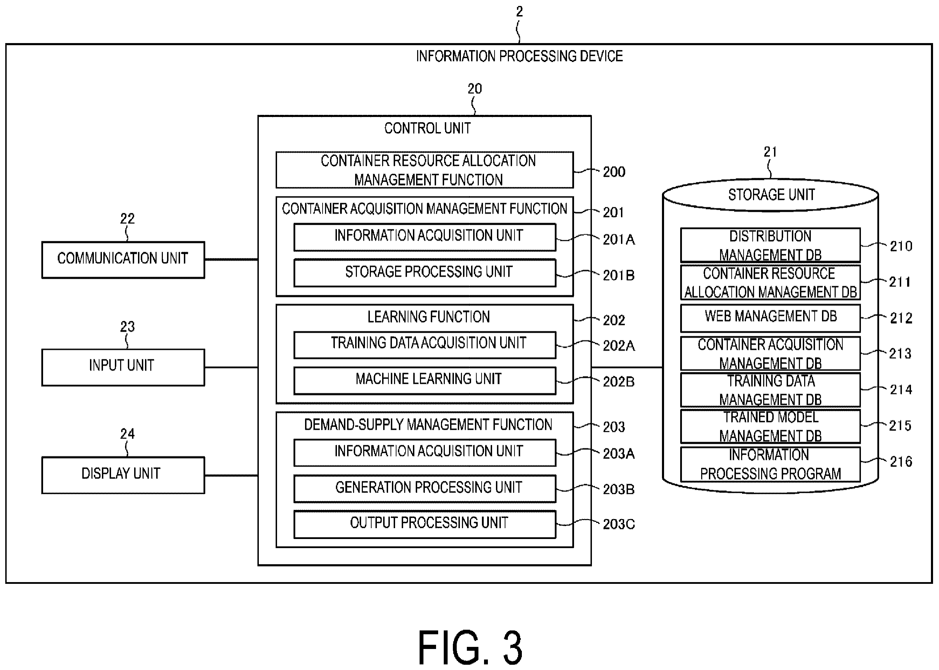

FIG. 3 is a block diagram illustrating an example of the information processing device 2 according to the present embodiment. The information processing device 2 includes a control unit 20 constituted by a processor and the like, a storage unit 21 constituted by an HDD, an SSD, a memory, and the like, a communication unit 22 that is a communication interface with the network 8, an input unit 23 constituted by a keyboard, a mouse, and the like, and a display unit 24 constituted by a display and the like. Note that the input unit 23 and the display unit 24 may be omitted.

The storage unit 21 stores various types of databases (DB) 210 to 215, and an information processing program 216, and also stores an operating system, other programs, data, and the like.

The control unit 20 executes the information processing program 216 stored in the storage unit 21 to implement a container resource allocation management function 200, a container acquisition management function 201, a learning function 202, and a demand-supply management function 203. The control unit 20 includes an information acquisition unit 201A and a storage processing unit 201B as units that implement the container acquisition management function 201. The control unit 20 includes a training data acquisition unit 202A and a machine learning unit 202B as units that implement the learning function 202. The control unit 20 includes an information acquisition unit 203A, a generation processing unit 203B, and an output processing unit 203C as units that implement the demand-supply management function 203.

Hereinafter, the contents of the functions 200 to 203 and the databases 210 to 215 will be described.

### Container Resource Allocation Management Function 200

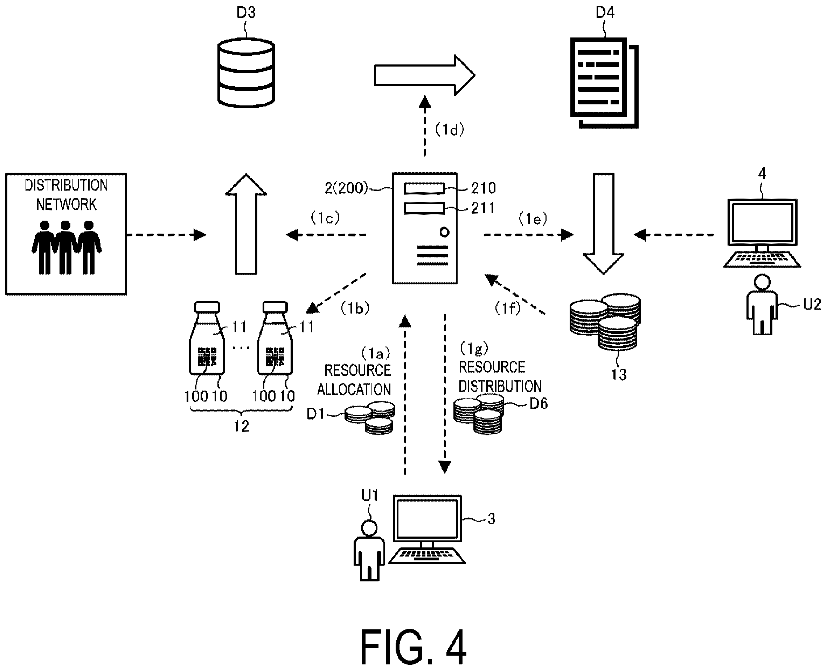

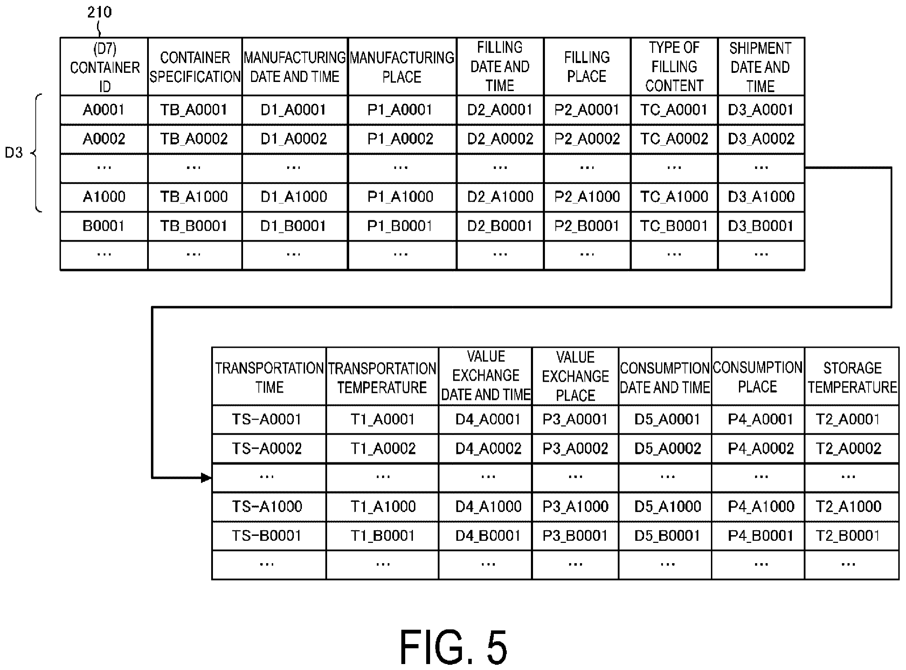

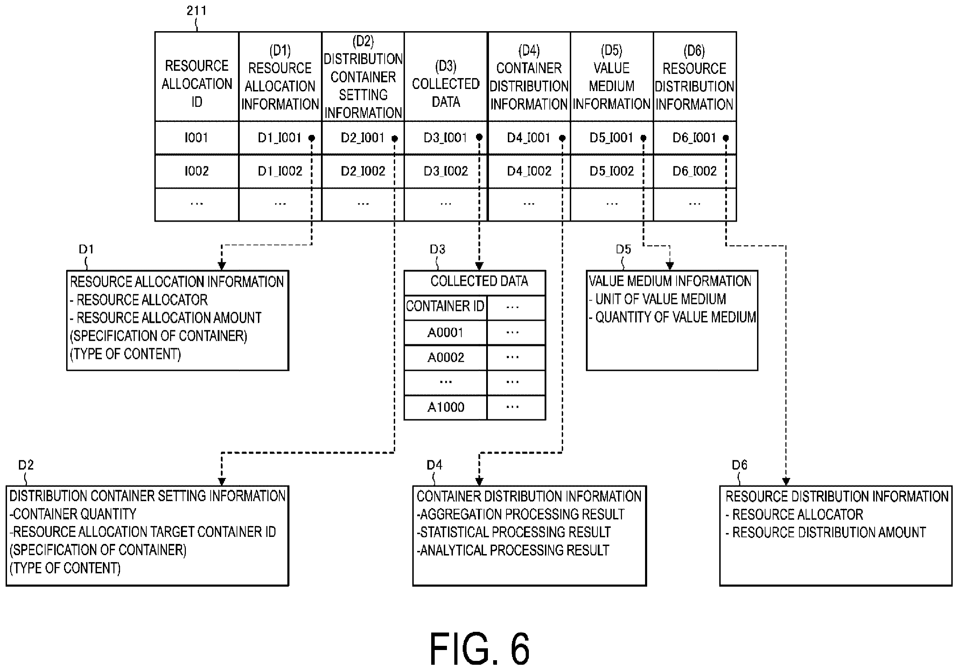

FIG. 4 is a functional explanatory diagram illustrating an example of the container resource allocation management function 200 and an information flow. The control unit 20 of the information processing device 2 implements the container resource allocation management function 200 by mainly using the distribution management database 210 (see FIG. 5, which will be described later) and the container resource allocation management database 211 (see FIG. 6, which will be described later).

When the information processing device 2 receives resource allocation information D1 from the resource allocator U1 through the resource allocator terminal device 3 (an arrow (1a) in FIG. 4), registers the resource allocation information D1 in the container resource allocation management database 211, generates distribution container setting information D2 in which the quantity and the specification of containers, and the type of the content 11 related to the containers 10 being an resource allocation target are set based on the resource allocation information D1, and performs the resource allocation in the containers 10 (an arrow (1b)). Then, when the information storage carrier 100 attached to the container 10 is read by a reading device (not illustrated) in distribution of the containers 10 being the resource allocation target in the distribution network, the information processing device 2 registers container state data indicating the state of each distribution stage of the container 10 in the distribution management database 210 in association with the container identification information D7 included in the information storage carrier 100, and stores collected data D3 in the container resource allocation management database 211 as a dataset of pieces of the container state data for a plurality of containers 10 (an arrow (1c)). The reading device may be constituted by a code reader, a camera, an electronic tag reader, or the like, and may be a fixed type or a handy type, or may be a built-in type built in a portable computer (such as a smartphone). The reading device is used at each distribution stage in the distribution network, and is installed at various places, such as a manufacturing factory, a logistics base, a transportation vehicle, a value exchange store, and a refrigerator in a home of the consumer U7.

In addition, the information processing device 2 generates container distribution information D4 based on the collected data D3 (an arrow (1d)), and converts the container distribution information D4 into a value medium 13 by providing the container distribution information D4 to the information user U2 through the information user terminal device 4 (an arrow (1e)). Then, the information processing device 2 generates resource distribution information D6 by allocating the value medium 13 based on the resource allocation information D1 (an arrow (1f)), registers the resource distribution information D6 in the container resource allocation management database 211, and provides a resource distribution to the resource allocator U1 based on the resource distribution information D6 (an arrow (1g)).

Note that examples of forms of the resource allocation in the containers 10 include a form in which, when the content manufacturer U5 orders the containers 10, resource allocation is performed for acquiring a part or all of the resource value of the containers 10, and a form in which, when the container manufacturer U4 manufactures the containers 10 or the container cleaning service provider U6 cleans the containers 10, resource allocation is performed for acquiring a part or all of the resource value for manufacturing or cleaning of the containers 10. The containers 10 being the resource allocation target may be provided to the content manufacturer U5 in accordance with the order from the content manufacturer U5, and the content manufacturer U5 can receive the provision of the containers 10 being the resource allocation target without having to pay an amount of the resource value equivalent to the resource allocation. On the other hand, in exchange for receiving the resource allocation, the content manufacturer U5 is required to permit the collection of the collected data D3 by using the containers 10 being the resource allocation target without holding the ownership of the containers 10 being the resource allocation target, and to cooperate with the collection of the collected data D3 as necessary.

FIG. 5 is a data configuration diagram illustrating an example of the distribution management database 210. The distribution management database 210 has a record for each of pieces of the container identification information D7 (container IDs). Each record has a field for registering container state data. In the example illustrated in FIG. 5, each record has fields in which a container specification, a manufacturing date and time (cleaning date and time), a manufacturing place (cleaning place), a filling date and time, a filling place, a type of filling content, a shipment date and time, a transportation time, a transportation temperature, a value exchange date and time, a value exchange place, a consumption date and time, a consumption place, a storage temperature, and the like can be registered. Note that although the container state data is registered when the container identification information D7 is read by the reading device, a part of the container state data may be acquired by a state detection device (such as a temperature sensor) installed at various places, similarly to the reading device. Additionally, the information processing device 2 may acquire the container state data in cooperation with an external system (such as a manufacturing management system, a transportation management system, or a value exchange management system) or in cooperation with an external application (such as an on-line shopping application or a refrigerator management application).

The manufacturing place, the cleaning place, the filling place, the value exchange place, the consumption place, and the like correspond to distribution position information regarding a position when the container 10 is distributed through each distribution stage. In addition, when the container 10 is temporarily stored at each distribution stage (for example, when the container 10 is stored in a period from the filling date and time to the shipment date and time) or when the container 10 is stored at a storage place such as a warehouse, the manufacturing place, the cleaning place, the filling place, the value exchange place, the storage place, and the like correspond to inventory position information regarding the position when the container 10 is stocked. The distribution position information and the inventory position information may be recorded, for example, by using coordinates such as a latitude and a longitude that indicate each position, or may be recorded by using regions, areas, or the like such as administrative districts, or mesh sections.

FIG. 6 is a data configuration diagram illustrating an example of the container resource allocation management database 211. The container resource allocation management database 211 has a record for each of resource allocation IDs for associating various types of information handled in the container resource allocation management function 200 with each other. Each record has fields in which, for example, the resource allocation information D1, the distribution container setting information D2, the collected data D3, the container distribution information D4, value medium information D5, the resource distribution information D6, and the like can be registered. Note that the container resource allocation management database 211 can be referred to from the management business operator terminal device 5, and editing operations such as addition, deletion, and modification of each piece of data may be performed on a display screen of the management business operator terminal device 5.

The resource allocation information D1 includes at least the resource allocator U1 and an amount of the resource allocation by the resource allocator U1. When there are a plurality of resource allocators U1, the amount of the resource allocation by each of the resource allocators U1 is included. Note that the resource allocation information D1 may include at least one of the specification of the containers 10 being the resource allocation target or the type of the content 11 with which the containers 10 being the resource allocation target is filled.

The distribution container setting information D2 includes at least the quantity of the containers 10 being the resource allocation target and an resource allocation target container ID specifying each of the containers 10 being the resource allocation target by using the container identification information D7. Note that the distribution container setting information D2 may include at least one of the specification of the container 10 being the resource allocation target or the type of the content 11 with which the container 10 being the resource allocation target is filled.

The collected data D3 is constituted by the container state data, for each of the containers 10, acquired by distributing the containers 10 being the resource allocation target in the distribution network. For example, in the record specified by the resource allocation ID of "1001", when the distribution container setting information D2 is set with the quantity of containers of "1000" and the resource allocation target container IDs of "A0001 to A1000", the collected data D3 is constituted by the container state data for 1000 of the containers 10, as illustrated in FIG. 5.

The container distribution information D4 includes, for example, a data analysis result generated by performing data analysis processing such as aggregation processing, statistical processing, and analytical processing on the collected data D3, and the like. Note that, instead of or in addition to the data analysis result, the container distribution information D4 may include the collected data D3 itself.

The value medium information D5 includes at least the unit of the value medium 13 and the quantity of the value medium 13. The value medium 13 is a price transferred by the information user U2 in exchange for the provision of the container distribution information D4, and for example, when the payment is made in any chosen currency (including digital currencies), the quantity of the value media 13 corresponds to the payment amount.

The resource distribution information D6 includes at least the resource allocator U1 and the resource distribution amount for the resource allocator U1. When there are a plurality of the resource allocators U1, the resource distribution amount for each of the resource allocators U1 is included.

### Container Acquisition Management Function 201

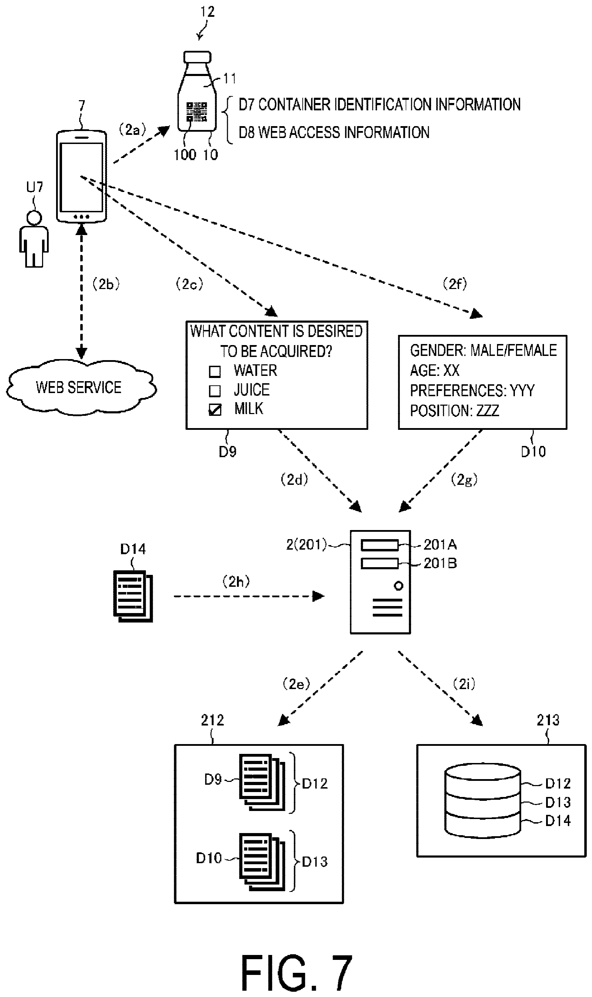

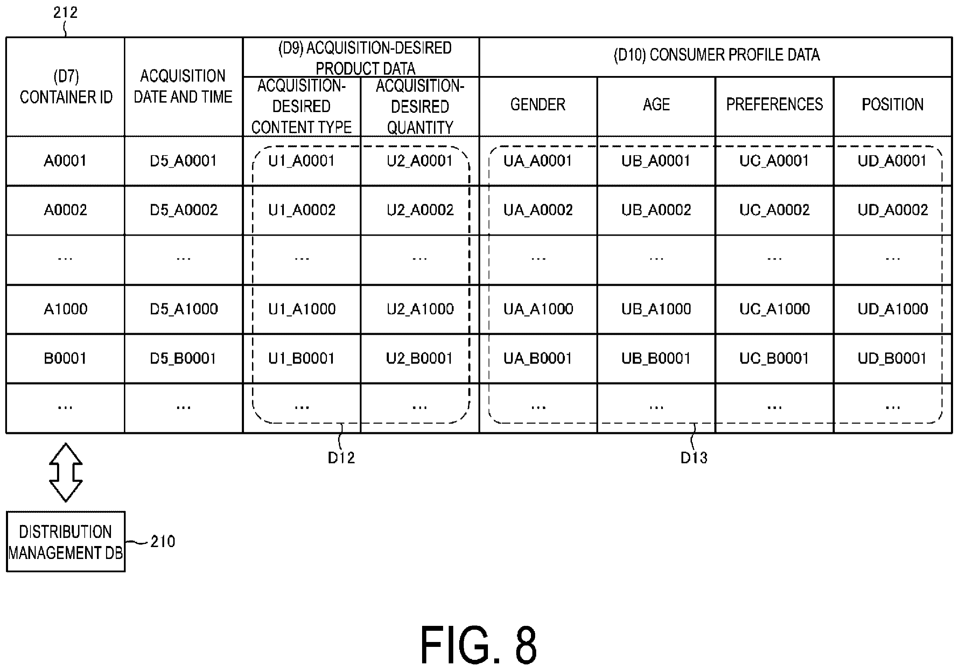

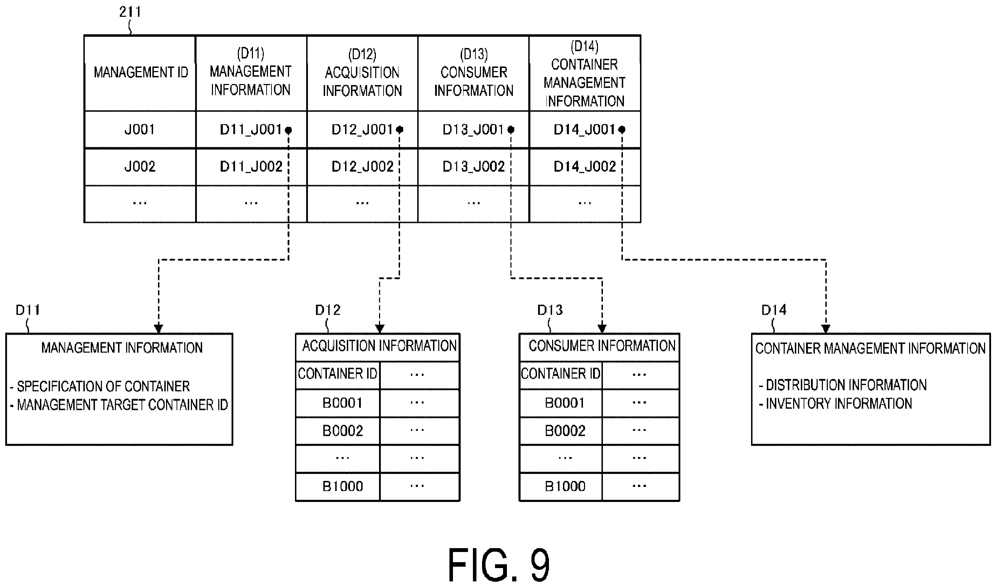

FIG. 7 is a functional explanatory diagram illustrating an example of the container acquisition management function 201 and an information flow. The information acquisition unit 201A and the storage processing unit 201B of the information processing device 2 implement the container acquisition management function 201 by mainly using a web management database 212 (see FIG. 8, which will be described later) and a container acquisition management database 213 (see FIG. 9, which will be described later).

The information acquisition unit 201A acquires acquisition information D12 indicating a type of the content 11 that the consumer U7 of the product 12 desires to acquire (hereinafter referred to as a "acquisition-desired content type") among the contents 11 with which a different container having the specification identical to that of the container 10 (hereinafter referred to as an "identical-specification container") can be filled, based on the container identification information D7 and the web access information D8 included in the information storage carrier 100 attached to the container 10 constituting the product 12. Note that conditions for the identical-specification containers may be set by the management business operator U3, the container manufacturer U4, or the like, and stored in the storage unit 21. In this case, for example, an editing operation may be performed on the conditions for the identical-specification containers on the display screen of the management business operator terminal device 5 or the distribution business operator terminal device 6A.

In particular, the information acquisition unit 201A acquires the acquisition information D12 through a web service when the web service is accessed based on the web access information D8 read from the information storage carrier 100 by using the consumer terminal device 7. In this case, the information acquisition unit 201A may further acquire consumer information D13 related to the consumer U7 from the consumer terminal device 7 when the web service is accessed.

For example, the consumer U7 who has acquired the product 12 reads the information storage carrier 100 attached to the container 10 by using the consumer terminal device 7 (an arrow (2a) in FIG. 7) as in the case of the above-described reading device, and accesses the web service based on the web access information D8 included in the information storage carrier 100 (an arrow (2b)). Then, the consumer terminal device 7 displays a display screen provided by the web service on a browser or an application (an arrow (2c)), and receives an input operation of acquisition-desired product data D9 including the acquisition-desired content type, an acquisition-desired quantity, and the like on the display screen from the consumer U7 (an arrow (2d)), and thus, the information acquisition unit 201A registers the acquisition-desired product data D9 in the web management database 212 in association with the container identification information D7 included in the information storage carrier 100 (an arrow (2e)). Then, the acquisition information D12 is acquired as a dataset of pieces of the acquisition-desired product data D9 for the plurality of containers 10 (the consumers U7). The web service may receive the acquisition-desired product data D9 as an actual order for the product 12 or as a pre-order or a result of questionnaire for the product 12.

Additionally, the information acquisition unit 201A refers to the memory of the consumer terminal device 7 when consumer profile data D10 such as a gender, an age, preferences, and a position of the consumer U7 is stored in the memory, receives an input operation of the consumer profile data D10 from the consumer U7 on the display screen of the consumer terminal device 7, and receives position information detected by a position detecting function of the consumer terminal device 7 (arrows (2f) and (2g)). Thus, the information acquisition unit 201A registers the consumer profile data D10 in the web management database 212 in association with the container identification information D7 included in the information storage carrier 100 (the arrow (2e)). Then, the consumer information D13 is acquired as a dataset of pieces of the consumer profile data D10 for the plurality of containers 10 (the consumers U7).

Note that the information acquisition unit 201A may further acquire container management information D14 including at least one of distribution information when the identical-specification containers are distributed through a plurality of distribution stages or inventory information when the identical-specification containers are stocked at the plurality of distribution stages (an arrow (2h)). The container management information D14 may be acquired from, for example, the distribution business operator terminal devices 6A to 6C, may be acquired by referring to information (for example, distribution position information, inventory position information, or the like) registered in each field of the distribution management database 210, or may be acquired by the information processing device 2 being in cooperation with an external system (the manufacturing management system, the transportation management system, the value exchange management system, or the like).

The storage processing unit 201B stores the acquisition information D12 acquired by the information acquisition unit 201A in the container acquisition management database 213 (an arrow (2i)). Note that when the information acquisition unit 201A acquires the consumer information D13 and the container management information D14 in addition to the acquisition information D12, the storage processing unit 201B stores the consumer information D13 and the container management information D14 in the container acquisition management database 213 (the arrow (2i)). Further, the storage processing unit 201B may store the acquisition information D12 and the like acquired by the information acquisition unit 201A in the container resource allocation management database 211, and in this case, the acquisition information D12 and the like may be provided to the information user U2 in exchange for the value medium 13 as a part of the container distribution information D4.

FIG. 8 is a data configuration diagram illustrating an example of the web management database 212. The web management database 212 has a record for each piece of the container identification information D7 (each of the container IDs). Each record has fields for registering the acquisition-desired product data D9 and the consumer profile data D10 acquired through the web service. In the example of FIG. 8, each record has fields that can register an acquisition date and time, an acquisition-desired content type, an acquisition-desired quantity, and a gender, an age, preferences, a position, and the like of the consumer U7.

The position included in the consumer profile data D10 corresponds to consumer position information related to a position of the consumer U7. The consumer position information is recorded as coordinates such as the latitude and the longitude indicating a position at a specific time point (for example, when he/she has accessed to a web service) of the consumer U7. The consumer position information may indicate a position such as an address or a range of activity, and in this case, the consumer position information may be recorded by using a region or an area such as an administrative district or a mesh section.

Note that the web management database 212 can be associated with the distribution management database 210 through the container identification information D7. In this case, by referring to the distribution management database 210 through the container identification information D7, information (for example, the distribution position information, the inventory position information, or the like) registered in each field of the distribution management database 210 can be acquired for each container 10.

FIG. 9 is a data configuration diagram illustrating an example of the container acquisition management database 213. The container acquisition management database 213 has a record for each of the management IDs for associating various types of information that are handled in the container acquisition management function 201 with each other. Each record includes fields in which, for example, management information D11, the acquisition information D12, the consumer information D13, the container management information D14, and the like can be registered. Note that the container acquisition management database 213 can be referred to from the management business operator terminal device 5 and the distribution business operator terminal devices 6A to 6C, and editing operations such as addition, deletion, and modification of data may be performed on the display screen of each of the management business operator terminal device 5 and the distribution business operator terminal devices 6A to 6C.

The management information D11 includes at least the specification of the containers 10 to be managed and management target container IDs specifying the containers 10 to be managed, by using the container identification information D7. The plurality of containers 10 specified by the management target container IDs are containers having the identical specification.

The acquisition information D12 is constituted by the acquisition-desired product data D9 for each of the containers 10 acquired through the web service from the consumers U7 of the products 12 in which the container 10 to be managed has been filled with the content 11. For example, in a record specified by a container management ID of "J001", when the management information D11 is set with a specification of the containers 10 indicating a "glass bottle of 200 mL" and management target container IDs of "B0001 to B1000", the acquisition information D12 is constituted by the acquisition-desired product data D9 for 1000 of the containers 10 (the glass bottles of 200 mL) having the identical specification, as illustrated in FIG. 9. Note that the acquisition information D12 may include the acquisition-desired product data D9 itself for each of the containers 10, or may include, instead of or in addition to the acquisition-desired product data D9, a data analysis result generated by performing data analysis processing such as aggregation processing, statistical processing, or analytical processing on the acquisition-desired product data D9 for each of the containers 10.

The consumer information D13 is constituted by the consumer profile data D10 (a gender, an age, preferences, a position, and the like), for each of the containers 10, acquired through the web service from the consumers U7 of the products 12 in which the container 10 to be managed has been filled with the content 11. In the example of FIG. 9, the consumer information D13 is constituted by the consumer profile data D10 for 1000 of the containers 10 (the glass bottles of 200 mL) having the identical specification. Note that the consumer information D13 may include the consumer profile data D10 itself for each of the containers 10, or may include, instead of or in addition to the consumer profile data D10 for each of the containers 10, a data analysis result generated by performing data analysis processing such as aggregation processing, statistical processing, and analytical processing on the consumer profile data D10 for each of the containers 10.

The container management information D14 includes at least one of distribution information when containers having the specification identical to that of the container 10 to be managed are distributed through the plurality of distribution stages or inventory information when the containers are stocked at the plurality of distribution stages. The distribution information includes, for example, a distribution quantity, a distribution rate, a distributing period, a resource value for distribution, and the like at each distribution stage. The inventory information includes, for example, an inventory quantity, an inventory rate, an inventory holding period, and a resource value for inventory at each distribution stage.

Note that the distribution information may include distribution position information. The distribution position information includes, for example, information related to each position (the manufacturing place, the cleaning place, the filling place, the value exchange place, the consumption place, and the like) when the containers 10 are distributed through the distribution stages. In this case, the distribution information may include the distribution quantity, the distribution rate, the distributing period, the resource value for distribution, and the like at each position.

Further, the inventory information may include inventory position information. The inventory position information includes, for example, information related to each position (the manufacturing place, the cleaning place, the filling place, the value exchange place, the storage place, and the like) when the containers 10 are in stock at each distribution stage. In this case, the inventory information may include the inventory quantity, the inventory rate, the inventory holding period, the resource value for inventory, and the like at each position.

### Learning Function 202

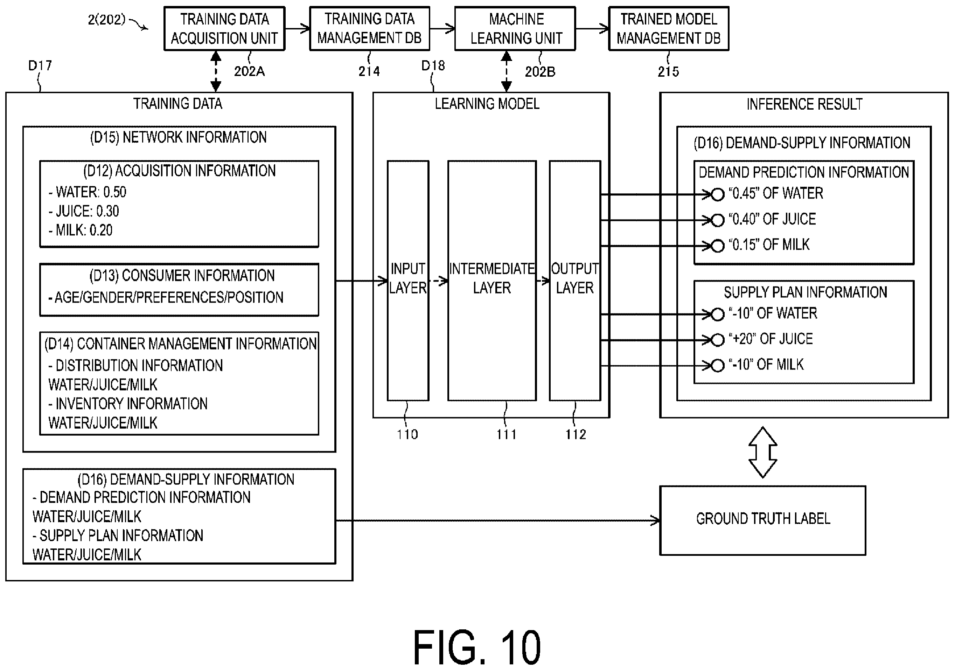

FIG. 10 is a functional explanatory diagram illustrating an example of the learning function 202 and an information flow. The training data acquisition unit 202A and the machine learning unit 202B of the information processing device 2 implement the learning function 202 by mainly using the container acquisition management database 213, a training data management database 214 (training data storage unit), and a trained model management database 215 (trained model storage unit).

The training data acquisition unit 202A acquires training data D17 constituted by network information D15 of the containers 10 that are a training target and demand-supply information D16 of the containers 10. The training data D17 is data that is used as training data, verification data and test data in supervised learning. In addition, the demand-supply information D16 is data that is used as a ground truth label in supervised learning.

The network information D15 constituting the input data of the training data D17 includes, as information acquired based on the container identification information D7 and the web access information D8 included in the information storage carrier 100 attached to each of the containers 10 that are a training target, the acquisition information D12 indicating the type of the content 11 that the consumer U7 of the product 12 constituted by the container 10 desires to acquire among the contents 11 with which a different container having the specification identical to that of the container 10 can be filled.

The acquisition information D12 is preferably, for example, a data analysis result based on the acquisition-desired product data D9 of a plurality of containers 10 (the consumers U7) in consideration of input to a learning model D18. The acquisition information D12 indicates, for example, as illustrated in FIG. 10, respective proportions of the acquisition-desired content type, and is expressed as a proportion of "water" desired to be acquired, a proportion of "juice" desired to be acquired, and a proportion of "milk" desired to be acquired. The acquisition information D12 may be for a single type of the content 11, and may be expressed by a proportion of "water" desired to be acquired, for example.

Note that the network information D15 may further include the consumer information D13 related to the consumer U7 of the product 12 constituted by the container 10 being the training target. Additionally, the network information D15 may further include the container management information D14 including at least one of distribution information when a different container having the specification identical to that of the container 10 being the training target is distributed through a plurality of distribution stages or inventory information when the different container is stocked at the plurality of distribution stages.

The demand-supply information D16 constituting the output data of the training data D17 is information related to demand or supply of the product 12 in which a different container having the specification identical to that of the container 10 being the training target has been filled with the content 11. The demand-supply information D16 includes, for example, at least one of demand prediction information related to demand prediction of the product 12 as information related to demand for the product 12, or supply plan information related to a supply plan of the product 12 as information related to supply of the product 12.

The demand prediction information is represented by, for example, a numerical value (a numerical value normalized within a range from 0 to 1 as illustrated in FIG. 10) indicating a degree of demand for each type of the content 11 or a score corresponding to each demand category ("low", "normal", "high", or the like) for each type of the content 11 in consideration of the output from the learning model D18. Note that the demand prediction information may be for a single type of content 11, and may be represented by a numerical value or a score indicating a degree of demand for "water", for example.

The supply plan information is represented by, for example, a numerical value (a numerical value normalized within a range from 0 to 1 as illustrated in FIG. 10) indicating a degree of supply for each type of the content 11 or a score corresponding to each demand category ("low", "normal", "high", or the like) for each type of the content 11 in consideration of the output from the learning model D18. Note that the supply plan information may be for a single type of content 11, and may be represented by a numerical value or a categorized value indicating a degree of supply for "water", for example.

For example, the training data acquisition unit 202A acquires the network information D15 constituting the training data D17 by referring to the acquisition information D12, the consumer information D13, and the container management information D14 registered in the container acquisition management database 213 or receiving an input operation from the management business operator terminal device 5 or the distribution business operator terminal devices 6A to 6C. In addition, the training data acquisition unit 202A acquires the demand-supply information D16 constituting the training data D17 by referring to the demand-supply information D16 registered as actual values, planned values, simulated values, and the like in an external system (the manufacturing management system, the transportation management system, the value exchange management system, or the like) or receiving an input operation from the management business operator terminal device 5 or the distribution business operator terminal devices 6A to 6C.

The training data management database 214 stores a plurality of sets of the training data D17 acquired by the training data acquisition unit 202A.

The machine learning unit 202B performs machine learning by using the plurality of sets of the training data D17 stored in the training data management database 214. That is, the machine learning unit 202B generates a trained learning model D18 by inputting the plurality of sets of the training data D17 to the learning model D18 and training the learning model D18 with a correlation between the network information D15 and the demand-supply information D16 included in the training data D17. When performing machine learning, the machine learning unit 202B may adopt any methods such as on-line learning, batch learning, and mini-batch learning. Note that the machine learning unit 202B may perform a predetermined preprocessing on input data (the network information D15) input to the learning model D18, and may perform a predetermined post-processing on output data (the demand-supply information D16) output from the learning model D18.

The learning model D18 employs a structure of neural network, and includes an input layer 110, an intermediate layer 111, and an output layer 112, for example. Synapses (not illustrated in the drawing) connecting respective neurons are provided between the layers, and each synapse is associated with a weight. A weight parameter group constituted by the weights of the synapses is adjusted through machine learning.

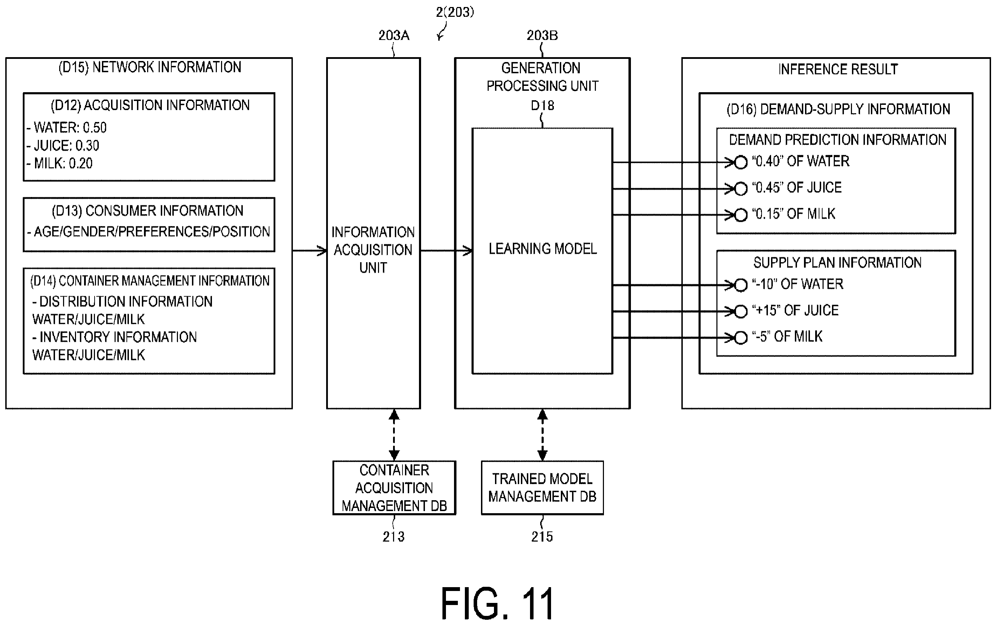

The input layer 110 includes neurons the number of which is corresponding to the number of values of the network information D15 as input data, and each value of the network information D15 is input to each neuron. The output layer 112 includes neurons the number of which is corresponding to the number of values of the demand-supply information D16 as output data, and a prediction result (inference result) of the demand-supply information D16 for the network information D15 is output as output data. When the learning model D18 is constituted by a regression model, the demand-supply information D16 is output as, for example, a numerical value (a numerical value normalized within a range from 0 to 1) indicating a degree of demand for each type of the content 11 and a numerical value (a numerical value normalized within a range from 0 to 1) indicating a degree of supply for each type of the content 11 as illustrated in FIG. 11. In addition, when the learning model D18 is constituted by a category model, the demand-supply information D16 is output as, for example, a score for each demand category for each type of the content 11 and a score for each supply category for each type of the content 11.

The trained model management database 215 stores the trained learning model D18 (specifically, an adjusted weight parameter group) generated by the machine learning unit 202B. The trained learning model D18 stored in the trained model management database 215 may be provided to another system through the network 8, a recording medium, and the like. Further, the trained learning model D18 may be stored in the container resource allocation management database 211, and in this case, the trained learning model D18 may be provided to the information user U2 in exchange for the value medium 13 as a part of the container distribution information D4.

Note that although, in the present embodiment, the case has been described where the data configurations of the training data D17 and the learning model D18 are constituted as illustrated in FIG. 10, a plurality of data configurations with different conditions such as the method of the machine learning, the specification of the container 10, the type of data included in the network information D15, and the type of data included in the demand-supply information D16, for example, may be adopted. In this case, the training data acquisition unit 202A may acquire a plurality of types of training data D17 individually corresponding to the plurality of data configurations with the different conditions, and the machine learning unit 202B may perform the machine learning by using the plurality of types of training data D17, and then stores the trained learning model D18 in the trained model management database 215.

### Demand-Supply Management Function 203

FIG. 11 is a functional explanatory diagram illustrating an example of the demand-supply management function 203 and an information flow. The information acquisition unit 203A, the generation processing unit 203B, and the output processing unit 203C of the information processing device 2 implement the demand-supply management function 203 by mainly using the container acquisition management database 213 and the trained model management database 215.

The information acquisition unit 203A acquires the network information D15 of the container 10 being a prediction target. For example, the information acquisition unit 203A refers to the container acquisition management database 213 and acquires the acquisition information D12 registered in the container acquisition management database 213 as the network information D15 of the container 10 being the prediction target. Note that the network information D15 of the container 10 being the prediction target may further include at least one of the consumer information D13 or the container management information D14 as illustrated in FIG. 11, in addition to the acquisition information D12.

The generation processing unit 203B generates the demand-supply information D16 for the network information D15 of the container 10 being the prediction target based on the demand-supply information D16 output by inputting, as input data, the network information D15 of the container 10 being the prediction target, which has been acquired by the information acquisition unit 203A, to the learning model D18. Note that the generation processing unit 203B may perform predetermined preprocessing on input data (the network information D15) input to the learning model D18, and may perform predetermined post-processing on output data (the demand-supply information D16) output from the learning model D18.

The learning model D18 that is used in the generation processing unit 203B is the trained learning model D18 stored in the trained model management database 215. Note that, when a plurality of learning models D18 having different conditions are stored in the trained model management database 215, the generation processing unit 203B may use, selectively or in parallel, the plurality of learning models D18 according to, for example, the types of data included in the network information D15 or the demand-supply information D16.

The output processing unit 203C performs output processing for outputting the demand-supply information D16 generated by the generation processing unit 203B. For example, the output processing unit 203C may transmit the demand-supply information D16 to the management business operator terminal device 5 or the distribution business operator terminal devices 6A to 6C. In addition, the output processing unit 203C may store the demand-supply information D16 in the container acquisition management database 213 or the container resource allocation management database 211. In this case, the demand-supply information D16 stored in the container resource allocation management database 211 may be provided to the information user U2 as a part of the container distribution information D4 in exchange for the value medium 13.

FIG. 12 is a hardware configuration diagram illustrating an example of a computer 900 that constitutes each device.

Each of the devices 2 to 7 of the container distribution system 1 is constituted by the computer 900 that is a general-purpose or dedicated computer. As illustrated in FIG. 12, the computer 900 includes, as main constituent elements thereof, a bus 910, a processor 912, a memory 914, an input device 916, an output device 917, a display device 918, a storage device 920, a communication I/F (interface) unit 922, an external device I/F unit 924, an I/O (input/output) device I/F unit 926, and a media input/output unit 928. Note that the above-mentioned constituent elements may be omitted as necessary according to the application of the computer 900.

The processor 912 is constituted by one or a plurality of computation processing devices (such as Central Processing Unit (CPU), Micro-Processing unit (MPU), Digital Signal Processor (DSP), and Graphics Processing Unit (GPU)) to operate as a control unit that generally controls the entirety of the computer 900. The memory 914 stores various data and a program 930 and is constituted by a volatile memory (such as DRAM and SRAM) that functions as a main memory, a nonvolatile memory (ROM), a flash memory, and the like, for example.

The input device 916 is constituted by, for example, a keyboard, a mouse, a numeric keypad, an electric pen, or the like, and functions as an input unit. The output device 917 is constituted by, for example, a sound (voice) output device, a vibration device, or the like, and functions as an output unit. The display device 918 is constituted by, for example, a liquid crystal display, an organic EL display, electronic paper, a projector, or the like, and functions as an output unit. The input device 916 and the display device 918 may be integrally formed as a touch panel display. The storage device 920 is constituted by, for example, an HDD, an SSD, or the like, and functions as a storage unit. The storage device 920 stores various data required for executing an operating system and the program 930.

The communication I/F unit 922 is connected to a network 940, which may be the same as the network 8 in FIG. 1, such as the Internet and an intranet, in a wired or wireless manner, and functions as a communication unit that transmits and receives data to and from other computers in accordance with a predetermined communication standard. The external device I/F unit 924 is connected to an external device 950, such as a camera, a printer, a scanner, or a reader/writer, in a wired or wireless manner, and functions as a communication unit that transmits and receives data to and from the external device 950 in accordance with a predetermined communication standard. The I/O device I/F unit 926 is connected to an I/O device 960 such as various sensors and actuators, and functions as a communication unit that transmits and receives, to and from the I/O device 960, data and various signals such as a detection signal of a sensor and a control signal to an actuator, for example. The media input/output unit 928 is constituted by a drive device such as a Digital Versatile Disc (DVD) drive or a Compact Disc (CD) drive, a memory card slot, or a USB connector, and reads and writes data from and to a medium (non-transitory storage medium) 970 such as a DVD, a CD, a memory card, or a USB memory.

In the computer 900 with the above-mentioned configuration, the processor 912 loads the program 930 stored in the storage device 920 into the memory 914 and executes the loaded program 930 to control each unit of the computer 900 through the bus 910. Note that the program 930 may be stored in the memory 914 instead of the storage device 920. The program 930 may be stored in the medium 970 in an installable file format or an executable file format, and provided to the computer 900 through the media input/output unit 928. The program 930 may be downloaded and provided to the computer 900 via the network 940 through the communication I/F unit 922. In addition, the computer 900 may provide various functions that are implemented by the processor 912 executing the program 930 by using hardware such as a field-programmable gate array (FPGA) or an application specific integrated circuit (ASIC).

The computer 900 is any form of an electronic device, and, for example, constituted by a stationary computer or a portable computer. The computer 900 may be a client-type computer, a server-type computer, or a cloud-type computer.

### Operation of Container Distribution System 1

Hereinafter, as an operation of the container distribution system 1, the functions 201 to 203 that are implemented by the information processing device 2 will be described. Note that in order to register or refer to each of pieces of the information D1 to D16, the information processing device 2 accesses the corresponding databases 210 to 215, but in the following description, the access operation will be appropriately omitted.

### Container Acquisition Management Method

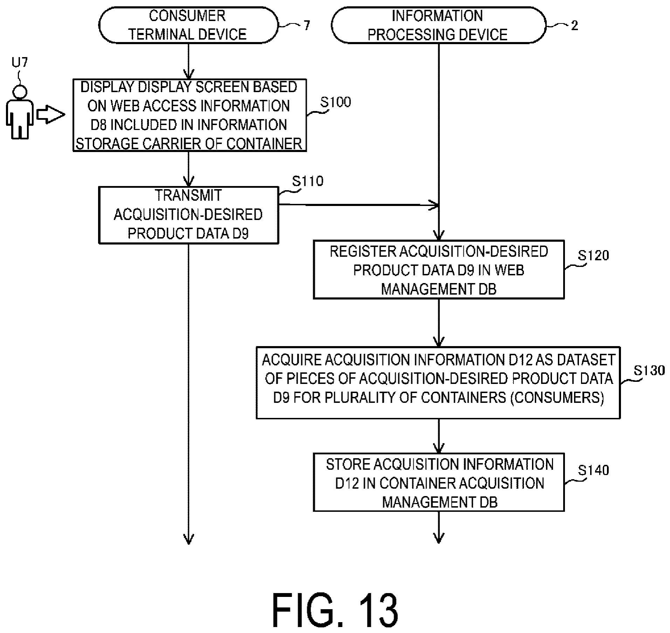

FIG. 13 is a flowchart depicting an example of a container acquisition management method by using the container acquisition management function 201.

First, in step S100, the consumer U7 who has acquired the product 12 reads the information storage carrier 100 attached to the container 10 constituting the product 12 by using the consumer terminal device 7. As a result, the consumer terminal device 7 accesses the web service based on the web access information D8 included in the information storage carrier 100, and displays a display screen based on the web service.

Next, in step S110, when the consumer terminal device 7 receives an input operation related to the acquisition-desired product data D9 including the acquisition-desired content type, the acquisition-desired quantity, and the like from the consumer U7 on the display screen, the consumer terminal device 7 transmits the acquisition-desired product data D9 to the information processing device 2 together with the container identification information D7 included in the information storage carrier 100.

Then, in step S120, the information acquisition unit 201A of the information processing device 2 receives the acquisition-desired product data D9 and the container identification information D7 from the consumer terminal device 7, and registers the acquisition-desired product data D9 in the web management database 212 in association with the container identification information D7. Note that when the consumer profile data D10 is acquired together with the acquisition-desired product data D9, the consumer profile data D10 is also registered in the web management database 212.

The above steps S100 to S120 are performed by each of a plurality of consumers U7 who have acquired the products 12, and thus the acquisition-desired product data D9 for a plurality of containers 10 (consumers U7) is accumulated in the web management database 212.

Next, in step S130, the information acquisition unit 201A refers to the web management database 212, and acquires the acquisition information D12 as a dataset of pieces of the acquisition-desired product data D9 for the plurality of containers 10 (consumers U7). Note that when the consumer profile data D10 is also registered in the web management database 212, the information acquisition unit 201A acquires the consumer information D13 as a dataset of pieces of the consumer profile data D10 for the plurality of containers 10 (consumers U7). Furthermore, the information acquisition unit 201A may acquire the container management information D14.

Next, in step S140, the storage processing unit 201B stores the acquisition information D12 acquired by the information acquisition unit 201A in the container acquisition management database 213. Note that when the consumer information D13 and the container management information D14 are acquired by the information acquisition unit 201A, the information acquisition unit 201A stores the consumer information D13 and the container management information D14 in the container acquisition management database 213.

As described above, a sequence of the container acquisition management method illustrated in FIG. 13 is completed. Note that in the container acquisition management method, steps S100 to S130 correspond to an information acquiring process, and step S140 corresponds to a storage processing process.

As described above, according to the container acquisition management function 201 and the container acquisition management method (information processing method) of the information processing device 2 according to the present embodiment, based on the web access information D8 included in the information storage carrier 100 attached to the container 10 constituting the product 12, the acquisition information D12 indicating the type of the content 11 that the consumer U7 of the product 12 desires to acquire among the contents 11 with which a different container having the specification identical to that of the container 10 can be filled is acquired, and the acquisition information D12 is stored in the container acquisition management database 213 (storage device). Thus, the containers 10 can be stably distributed by utilizing the acquisition information D12.

For example, in the case of performing high-mix low-volume production in which containers having the identical specification are used for a plurality of types of contents 11, demand prediction of the consumer U7 and a supply plan of a distributor (the container manufacturer U4, the content manufacturer U5, the container cleaning service provider U6, and the like) can be provided with high accuracy based on the acquisition information D12, and thus the containers 10 can be stably distributed. In particular, by acquiring the above-described acquisition information D12 for the containers 10 being the resource allocation target, the demand prediction and the supply plan of the products 12 by using the containers 10 being the resource allocation target are provided with high accuracy, and the distribution of the containers 10 being the resource allocation target is promoted in the distribution network, so that the collected data D3 by using the containers 10 being the resource allocation target is quickly and reliably collected. This makes it possible to reliably pay a resource distribution for the resource allocation, and thus to improve an added value of the container resource allocation management function 200.

### Machine Learning Method

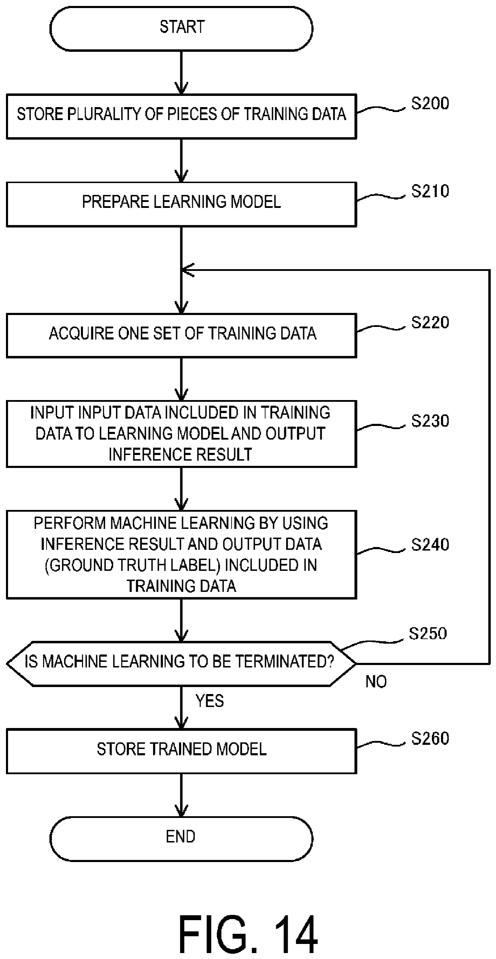

FIG. 14 is a flowchart depicting an example of a machine learning method by using the learning function 202.

First, in step S200, as preliminary preparation for starting machine learning, the training data acquisition unit 202A of the information processing device 2 acquires a desired quantity of the training data D17, and stores the acquired training data D17 in the training data management database 214. The quantity of the training data D17 prepared here may be set in consideration of inference accuracy required for a finally obtained learning model D18.

Next, in step S210, the machine learning unit 202B prepares an untrained learning model D18 to start the machine learning. The untrained learning model D18 prepared here is constituted by the neural network model exemplified in FIG. 10, and the weight of each synapse is set to an initial value.

Next, in step S220, the machine learning unit 202B randomly acquires a set of the training data D17 from among a plurality of sets of the training data D17 stored in the training data management database 214, for example.

Next, in step S230, the machine learning unit 202B inputs the network information D15 (input data) included in the set of the training data D17 into the input layer 110 of the prepared and untrained (or in-training) learning model D18. As a result, the demand-supply information D16 (output data) is output as an inference result from the output layer 112 of the learning model D18, but this output data is generated by using the untrained (or in-training) learning model D18. Thus, in the state before training (or during training), the output data output as the inference result indicates information different from the demand-supply information D16 (a ground truth label) included in the training data D17.

Next, in step S240, the machine learning unit 202B performs the machine learning by performing processing (backpropagation) of comparing the demand-supply information D16 (ground truth label) included in the set of training data D17 acquired in step S220, and the demand-supply information D16 (output data) output as the inference result from the output layer 112 in step S230 and thus adjusting the weight of each synapse. In this manner, the machine learning unit 202B trains the learning model D18 with a correlation between the network information D15 and the demand-supply information D16.

Next, in step S250, the machine learning unit 202B determines whether a predetermined training termination condition is satisfied, based on an evaluation value obtained by using an error function based on the demand-supply information D16 (ground truth label) included in the training data D17 and the demand-supply information D16 (output data) output as the inference result, and the remaining quantity of the training data D 17 not used yet for training and stored in the training data management database 214, for example.

In step S250, when the machine learning unit 202B determines that the training termination condition is not satisfied and the machine learning is to be continued (No in step S250), the processing is returned to step S220, and the processing of steps S220 to S240 are performed a plurality of times for the in-training learning model D18 by using the training data D17 not used yet for training. On the other hand, in step S250, when the machine learning unit 202B determines that the training termination condition is satisfied and the machine learning is to be terminated (Yes in step S250), the processing proceeds to step S260.

Then, in step S260, the machine learning unit 202B stores, in the trained model management database 215, the trained learning model D18 (an adjusted weight parameter group) generated by adjusting the weight associated with each synapse.

As described above, a procedure of the machine learning method illustrated in FIG. 14 is completed. In the machine learning method, step S200 corresponds to a training data storage process, steps S210 to S250 correspond to a machine learning process, and step S260 corresponds to a trained model storage process.

As described above, the learning function 202 and the machine learning method of the information processing device 2 according to the present embodiment can provide the learning model D18 capable of generating (inferring), from the network information D15 of the container 10 being a prediction target, the demand-supply information D16 of the container 10. This is because the learning model D18 is trained with a correlation between the network information D15 of the container 10 being a training target and the demand-supply information D16. The network information D15 includes at least the acquisition information D12 as information acquired based on the web access information D8 included in the information storage carrier 100 attached to the container 10 constituting the product 12. The demand-supply information D16 includes, for each type of the contents 11, information related to demand or supply of the product 12 in which a different container having the specification identical to that of the container 10 has been filled with the content 11.

### Demand-Supply Management Method

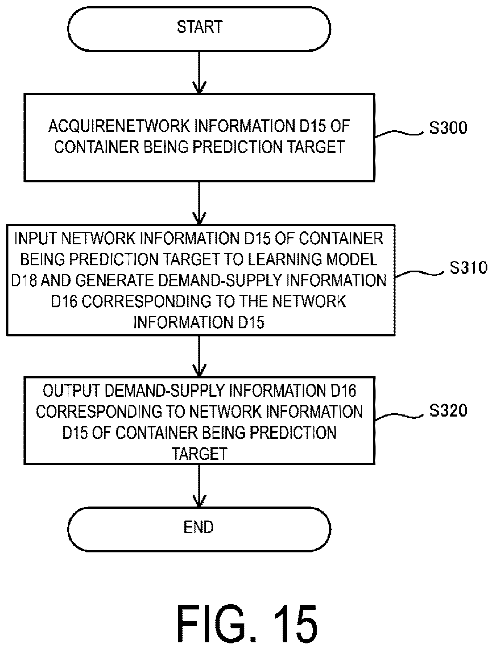

FIG. 15 is a flowchart depicting an example of a demand-supply management method by using the demand-supply management function 203.

First, in step S300, when the information acquisition unit 203A of the information processing device 2 receives, for example, a prediction target container ID for specifying the container 10 being a prediction target by using the container identification information D7 from the management business operator terminal device 5, the information acquisition unit 203A refers to the container acquisition management database 213 and specifies a management ID including the prediction target container ID. Then, the information acquisition unit 203A acquires the acquisition information D12, the consumer information D13, and the container management information D14 associated with the management ID as the network information D15 of the container 10 being the prediction target. Note that the information acquisition unit 203A may acquire the network information D15 of the container 10 being the prediction target by receiving other information such as the specification of the container 10, for example, instead of the container identification information D7.

Next, in step S310, by inputting the network information D15 of the container 10 being the prediction target, which has been acquired in step S300, into the learning model D18, the generation processing unit 203B generates, as output data, the demand-supply information D16 corresponding to the network information D15.

Next, in step S320, as output processing of outputting the demand-supply information D16 of the container 10 being the prediction target, which has been generated in step S310, the output processing unit 203C transmits the demand-supply information D16 to the management business operator terminal device 5. Then, the management business operator terminal device 5 displays a display screen based on the demand-supply information D16, and thus the demand-supply information D16 of the container 10 is presented to the management business operator U3. Note that destinations of the demand-supply information D16 may be the distribution business operator terminal devices 6A to 6C in addition to or instead of the management business operator terminal device 5.

As described above, a procedure of the demand-supply management method illustrated in FIG. 15 is completed. In the above-described demand-supply management method, step S300 corresponds to an information acquisition process, step S310 corresponds to a generation process, and step S320 corresponds to an output process.

As described above, according to the demand-supply management function 203 and the demand-supply management method (the information processing method) of the information processing device 2 according to the present embodiment, firstly, based on the web access information D8, the acquisition information D12 is acquired as the network information D15 of the container 10 being the prediction target. The acquisition information D12 indicates the type of the content 11 that the consumer U7 of the product 12 desires to acquire among the contents 11 with which a different container having the specification identical to that of the container 10 can be filled. The web access information D8 is included in the information storage carrier 100 attached to the container 10 constituting the product 12. Secondly, the network information D15 is input to the learning model D18, thereby generating the demand-supply information D16. The demand-supply information D16 includes, for each of the types of the contents 11, information related to the demand or supply of the product 12 in which the different container having the specification identical to that of the container 10 has been filled with the content 11. Thus, the containers 10 can be stably distributed by utilizing the demand-supply information D16.

For example, by treating the container 10 being an resource allocation target as the container 10 being the prediction target, the demand-supply information D16 as described above is generated corresponding to the network information D15 of the container 10 being the resource allocation target. Then, the demand-supply information D16 is used to boost the distribution of the containers 10 being the resource allocation target in the distribution network, thereby quickly and reliably collecting the collected data D3 by using the containers 10 being the resource allocation target. This makes it possible to reliably pay a resource distribution for the resource allocation, and thus to improve an added value of the container resource allocation management function 200.

In addition, when the container management information D14 included in the network information D15 includes the distribution position information and the inventory position information, the demand-supply information D16 as described above is generated in consideration of positions of the containers 10 at each distribution stage, that is, a distribution state such as a distribution and retention state of the containers 10 in distribution routes. This makes it possible to provide the more accurate demand prediction and supply plan according to the distribution state of the containers 10.

### Other Embodiments

The present invention is not restricted to the embodiments described above, but can be implemented with various changes without departing from the scope and spirit of the present invention. All of them are included in the technical concept of the present invention.

In the embodiment described above, the plurality of functions 200 to 203 included in the information processing device 2 have been described as being implemented by one device. However, the respective functions 200 to 203 may be distributed among a plurality of devices (computers) to be implemented by the plurality of devices. In this case, each of the four functions 200 to 203 may be implemented by a single device, or any two or three of the four functions 200 to 203 may be implemented by a single device.

In the embodiment described above, the case where the information processing device 2 operates in accordance with the flowcharts depicting in FIG. 13 to FIG. 15 has been described, but a part of each step (each unit) may be omitted, or another step may be added. In this case, each omitted step (each omitted unit) may be executed by an external system (the manufacturing management system, the transportation management system, the value exchange management system, a data analysis system, or the like).

Although, in the embodiment described above, the case has been described where the neural network is employed as the learning model D18 that achieves the machine learning of the learning function 202, other machine learning models may also be employed. Examples of other machine learning models include tree types such as decision trees and regression trees, ensemble learning such as bagging and boosting, neural net types (including deep learning) such as recurrent neural networks, convolutional neural networks and LSTM, clustering types such as hierarchical clustering, non-hierarchical clustering, a k-nearest neighbor method, and a k-means method, multivariate analysis such as principal component analysis, factor analysis, and logistic regression, and support vector machines.

### Inference Device, Inference Method and Inference Program

The present invention may be provided not only in the form of the information processing device 2 (method or program) according to the above-described embodiment, but also in the form of an inference device (inference method or inference program). In this case, the inference device (inference method or inference program) may include a memory, and a processor that executes a series of processes. The series of processes includes the information acquisition process (information acquisition step) of acquiring at least acquisition information as network information of a container being an inference target based on web access information included in an information storage carrier attached to the container, and an inference process (inference step) of inferring demand-supply information corresponding to the container being the inference target when the network information of the container being the inference target is acquired in the information acquisition process.

The form of the inference device (inference method or inference program) is allowed to be more easily applied to various devices, compared with the case where the information processing device is mounted. A person skilled in the art naturally understands that when the inference device (inference method or inference program) infers the demand-supply information, the inference method implemented by the generation processing unit may be applied by using the trained learning model generated by the machine learning device and the machine learning method according to the above-described embodiment.

### Reference Signs List

1: Container distribution system, 2: Information processing device, 3: Resource allocator terminal device,
4: Information user terminal device, 5: Management business operator terminal device, 6A to 6C: Distribution business operator terminal device,
7: Consumer terminal device, 8: Network, 10: Container, 11: Content, 12: Product,
20: Control unit, 21: Storage unit, 22: Communication unit, 23: Input unit, 24: Display unit, 100: Information storage carrier, 200: Container resource allocation management function,
201: Container acquisition management function, 201A: Information acquisition unit, 201B: Storage processing unit,
202: Learning function, 202A: Training data acquisition unit, 202B: Machine learning unit,
203: Demand-supply management function, 203A: Information acquisition unit, 203B: Generation processing unit,
203C: Output processing unit, 210: Distribution management database,
211: Container resource allocation management database, 212: Web management database,
213: Container acquisition management database, 214: Training data management database,
215: Model management database, 216: Information processing program,
D1: Resource allocation information, D2: Distribution container setting information, D3: Collected data,
D4: Container distribution information, D5: Value medium information, D6: Resource distribution information, D7: Container identification information,
D8: Web access information, D9: Acquisition-desired product data, D10: Consumer profile data,
D11: Management information, D12: Acquisition information, D13: Consumer information,
D14: Container management information, D15: Network information, D16: Demand-supply information,
D17: Training data, D18: Learning model,
U1: Resource allocator, U2: Information user, U3: Management business operator, U4: Container manufacturer,
U5: Content manufacturer, U6: Container cleaning service provider, U7: Consumer

## Claims

1. An information processing device comprising:
an information acquisition unit configured to acquire, based on web access information, acquisition information as network information related to a prediction target container, the web access information included in an information storage carrier attached to a container, the container being filled with a content and thus constituting a product, the acquisition information indicating a type of a content that a consumer of the product desires to acquire among contents with which a different container having a specification identical to a specification of the container can be filled; and
a generation processing unit configured to generate demand-supply information corresponding to the network information of the prediction target container when the network information related to the prediction target container and acquired by the information acquisition unit is input to a learning model trained by machine learning with a correlation between network information of a training target container and demand-supply information including, for each of the types of the contents, information related to demand or supply of the product in which the different container having the specification identical to the specification of the container has been filled with the content.

2. The information processing device according to claim 1, wherein
the network information further includes
container management information including at least one of distribution information when the different container having the identical specification is distributed through a plurality of distribution stages or inventory information when the different container is stocked at the plurality of distribution stages.

3. The information processing device according to claim 2, wherein
the distribution information includes distribution position information related to a position when the container is distributed, and
the inventory information includes inventory position information related to a position when the container is stocked.

4. The information processing device according to claim 2, wherein
the plurality of distribution stages include at least
a cleaning stage of cleaning the container,
a filling stage of filling the container with the content, and
a consumption stage of consuming, by the consumer, the content with which the container has been filled.

5. The information processing device according to any one of claims 1 to 4, wherein
the demand-supply information includes at least one of,
as information related to demand of the product, demand prediction information related to a demand prediction of the product, and
as information related to supply of the product, supply plan information related to a supply plan of the product.

6. An inference device comprising:
a memory; and
a processor,
wherein
the processor executes:
information acquisition of acquiring, based on web access information, acquisition information as network information related to an inference target container, the web access information included in an information storage carrier attached to a container, the container being filled with a content and thus constituting a product, the acquisition information indicating a type of a content that a consumer of the product desires to acquire among contents with which a different container having a specification identical to a specification of the container can be filled, and
inference of inferring demand-supply information including, for each of the types of the contents, information related to demand or supply of the product in which the different container having the specification identical to the specification of the container has been filled with the content when the network information of the inference target container is acquired in the information acquisition.

7. A machine learning device comprising:
a learning data storage unit configured to store a plurality of sets of training data, the training data being constituted by network information and demand-supply information, the network information including acquisition information as information acquired based on web access information, the web access information included in an information storage carrier attached to a container, the container being filled with a content and thus constituting a product, the acquisition information indicating a type of a content that a consumer of the product desires to acquire among contents with which a different container having a specification identical to a specification of the container can be filled, the demand-supply information including, for each of the types of the contents, information related to demand or supply of the product in which the different container having the specification identical to the specification of the container has been filled with the content;
a machine learning unit configured to train a learning model with a correlation between the network information and the demand-supply information when the plurality of sets of training data to the learning model is input; and
a trained model storage unit configured to store the learning model trained with the correlation by the machine learning unit.

8. An information processing method comprising:
information acquisition of acquiring, based on web access information, acquisition information as network information related to a prediction target container, the web access information included in an information storage carrier attached to a container, the container being filled with a content and thus constituting a product, the acquisition information indicating a type of a content that a consumer of the product desires to acquire among contents with which a different container having a specification identical to a specification of the container can be filled; and
a generation processing unit configured to generate demand-supply information corresponding to the network information of the prediction target container when the network information related to the prediction target container and acquired in the information acquisition is input to a learning model trained by machine learning with a correlation between the network information of a training target container and demand-supply information including, for each of the types of the contents, information related to demand or supply of the product in which the different container having the specification identical to the specification of the container has been filled with the content.

9. An inference method that is executed by an inference device including a memory and a processor, wherein
the processor executes:
information acquisition of acquiring, based on web access information, acquisition information as network information related to a prediction target container, the web access information included in an information storage carrier attached to a container, the container being filled with a content and thus constituting a product, the acquisition information indicating a type of a content that a consumer of the product desires to acquire among contents with which a different container having a specification identical to a specification of the container can be filled; and
inference of inferring demand-supply information including, for each of the types of the contents, information related to demand or supply of the product in which the different container having the specification identical to the specification of the container has been filled with the content when the network information of the prediction target container is acquired in the information acquisition.

10. A machine learning method comprising:
storing, in a training data storage unit, a plurality of sets of training data, the training data being constituted by network information and demand-supply information, the network information including acquisition information as information acquired based on web access information, the web access information included in an information storage carrier attached to a container, the container being filled with a content and thus constituting a product, the acquisition information indicating a type of a content that a consumer of the product desires to acquire among contents with which a different container having a specification identical to a specification of the container can be filled, the demand-supply information including, for each of the types of the contents, information related to demand or supply of the product in which the different container having the specification identical to the specification of the container is filled with the content;
machine training a learning model with a correlation between the network information and the demand-supply information when the plurality of sets of training data to the learning model is input; and
storing, in a trained model storage unit, the learning model trained with the correlation through the machine training.

11. An information processing device comprising:
an information acquisition unit configured to acquire, based on web access information, acquisition information, the web access information included in an information storage carrier attached to a container, the container being filled with a content and thus constituting a product, the acquisition information indicating a type of a content that a consumer of the product desires to acquire among contents with which a different container having a specification identical to a specification of the container can be filled; and
a storage processing unit configured to store, in a storage device, the acquisition information acquired by the information acquisition unit.

12. The information processing device according to claim 11, wherein
the information acquisition unit further acquires container management information including at least one of distribution information when the different container having the identical specification is distributed through a plurality of distribution stages or inventory information when the different container is stocked at the plurality of distribution stages, and
the storage processing unit stores, in the storage device, the acquisition information and the container management information acquired by the information acquisition unit.

13. The information processing device according to claim 12, wherein
the distribution information includes distribution position information related to a position when the container is distributed, and
the inventory information includes inventory position information related to a position when the container is stocked.

14. The information processing device according to claim 12, wherein
the plurality of distribution stages include at least
a cleaning stage of cleaning the container,
a filling stage of filling the container with the content, and
a consumption stage of consuming, by the consumer, the content with which the container has been filled.

15. The information processing device according to any one of claims 11 to 14, wherein
the information acquisition unit acquires the acquisition information through a web service when the web service is accessed based on the web access information read from the information storage carrier by using a terminal device used by the consumer.

16. The information processing device according to claim 15, wherein
the information acquisition unit acquires consumer information related to the consumer from the terminal device when the web service is accessed, and
the storage processing unit stores the acquisition information and the consumer information acquired by the information acquisition unit in the storage device.

17. The information processing device according to claim 16, wherein
the consumer information includes consumer position information related to a position of the consumer.

18. An information processing method comprising:
information acquisition of acquiring, based on web access information, acquisition information, the web access information included in an information storage carrier attached to a container, the container being filled with a content and thus constituting a product, the acquisition information indicating a type of a content that a consumer of the product desires to acquire among contents with which a different container having a specification identical to a specification of the container can be filled; and
storing of storing, in a storage device, the acquisition information acquired in the information acquisition.
